**Europäisches Patentamt**

(19) **European Patent Office**

**Office européen des brevets**

(11) Veröffentlichungsnummer: **0 072 457**
**B1**

(12) **EUROPÄISCHE PATENTSCHRIFT**

(45) Veröffentlichungstag der Patentschrift:
**29.05.85**

(21) Anmeldenummer: **82106713.9**

(22) Anmeldetag: **24.07.82**

(51) Int. Cl.⁴: **C 10 J 3/08**, C 10 J 3/84,
C 10 J 3/46, C 22 C 33/00,
C 01 B 31/32, C 01 B 25/027,
C 22 B 13/00

(54) Verfahren und Vorrichtung zur Herstellung von Synthesegas.

(30) Priorität: **18.08.81 DE 3132506**

(43) Veröffentlichungstag der Anmeldung:
**23.02.83 Patentblatt 83/8**

(45) Bekanntmachung des Hinweises auf die Patenterteilung:
**29.05.85 Patentblatt 85/22**

(84) Benannte Vertragsstaaten:
**BE DE FR GB IT NL SE**

(56) Entgegenhaltungen:
**CH - A - 305 380**
**DE - B - 1 021 835**
**DE - C - 1 020 434**
**FR - A - 1 041 273**
**GB - A - 229 331**
**GB - A - 237 883**
**GB - A - 332 366**
**US - A - 4 153 426**

(73) Patentinhaber: **HOECHST AKTIENGESELLSCHAFT,
Postfach 80 03 20, D-6230 Frankfurt am Main 80 (DE)**
Patentinhaber: **Uhde GmbH,
Friedrich-Uhde-Strasse 15 Postfach 262,
D-4600 Dortmund 1 (DE)**

(72) Erfinder: **Portz, Willi, Dr., Zum Schlagbaum 2,
D-5042 Erftstadt (DE)**
Erfinder: **Goldmann, Edgar, Am Qualenberg 28,
D-5042 Erftstadt (DE)**
Erfinder: **Pietzarka, Friedrich Wilhelm, Dr.,
Gögestrasse 11, D-4600 Dortmund 50 (DE)**
Erfinder: **Neumann, Ulrich, Glatbekeweg 28,
D-4600 Dortmund 41 (DE)**
Erfinder: **Meurer, Peter, Dr., Wilhelm-Huck-Strasse 39,
D-5804 Herdecke-Ende (DE)**

(74) Vertreter: **Hubbuch, Klaus, Dr. et al, Hoechst
Aktiengesellschaft WERK KNAPSACK Postfach 29 02,
D-5030 Hürth (DE)**

## Beschreibung

Die autotherme Vergasung kohlenstoffreicher Materialien, besonders von Koks und Kohle, mit technisch reinem Sauerstoff oder Mischungen aus Sauerstoff und Zusatzgasen, vorzugsweise Wasserdampf, Stickstoff oder Kohlendioxid, ist bekannt. Die Vergasung wird dabei in einem geeigneten Reaktorraum durchgeführt, der unterschiedliche Ausführungsformen haben kann, so daß die Vergasung nach Art z. B. einer Flugstromvergasung oder Festbettvergasung bei Normaldruck oder erhöhtem Druck ablaufen kann. Bisher verwendete Zuschlagstoffe zum kohlenstoffreichen Material sollten überwiegend die physikalischen Eigenschaften der Schlacke günstig beeinflussen.

So beschreibt die DE-PS 1 068 415 ein Verfahren zur Erzeugung von Synthese- oder Brenngas durch Vergasen fester Brennstoffe mit Sauerstoff bei Temperaturen von 1200 bis 1375° C, wobei zwecks Herabsetzung der Schlackenschmelztemperatur ein Flußmittel, z. B. Kalk, zugesetzt werden kann. Beim Verfahren der DE-AS 1 508 083 zur Herstellung von Reduktionsgasen zur Eisenerzeugung durch Vergasen von festen kohlenstoffhaltigen Brennstoffen mit Luft im Wirbelbett bei 1000 bis 1500° C setzt man den Brennstoffen Kalkstein, Kalk oder kieselsäure- und tonerdehaltige Materialien in solcher Menge zu, daß sie den Aschenschmelzpunkt über die Arbeitstemperatur erhöhen. Die DE-AS 2 520 584 beschreibt die Vergasung schwefelhaltiger Kohle in einem Eisenbadreaktor, wobei Kalk, Kalkstein oder Dolomit auf das Eisenbad gegeben werden, um eine entschwefelnd wirkende Schlacke zu erzeugen. Die DE-PS 930 539 und 1 012 420 beschreiben ein Verfahren zur Gaserzeugung, bei dem Wasserdampf bei 775−980° C in eine Mischung von kohlenstoffhaltigem festen Brennstoff und Kalziumoxid oder Kalk eingeleitet wird, wobei die in der Reaktionszone anwesende Menge von Kalziumoxid oder Kalk genügt, um nahezu das gesamte entstehende Kohlendioxid in Karbonat zu verwandeln.

Gemäß dem Verfahren der US-PS 3 017 259 wird Koks und Kalk in Wasserdampf dispergiert und mit Sauerstoff in einem Fließbettreaktor bei 1650° −2750° C umgesetzt, wobei Calciumcarbid und Synthesegas ($CO + H_2$) entstehen. Die Reaktionsprodukte werden mit einem Kohlenwasserstofföl auf unter 425° C gekühlt, wobei eine Suspension von Calciumcarbid vom Synthesegas abgetrennt wird.

Die GB-PS 237 883 und 229 331 betreffen Verfahren und Vorrichtungen zur Vergasung fester Brennstoffe mit gleichzeitiger Verdampfung oder Reduktion von Erzen oder gleichzeitigem Schmelzen von Metallen. Die GB-PS 237 883 stellt eine Erweiterung des Verfahrens der GB-PS 229 331 dar und zitiert letztere an entscheidenden Stellen.

Beim Verfahren der GB-PS 237 883 handelt es sich nicht um eine Vergasung von Kohlenstaub, vielmehr werden eine normal anfallende Kohle gesiebt, die Feinanteile in Staub und Grus aufgeteilt und nur der so angefallene Kohlenstaub in die Vergasungsapparatur eingeblasen. Der weit überwiegende Teil der zu vergasenden Kohle, nämlich der Grobanteil, aber auch der zuvor brikettierte Grus, wird über ein Zuführungsorgan am oberen Ende des Vergasers eingeführt und im Gegenstrom zum Vergasungsmittel umgesetzt.

Das in der US-PS 4 153 426 beschriebene Verfahren stellt einen Hochofen dar, der zu einem Vergaser umgebaut wurde. Die beim Hochofen vorhandenen Blasformen werden durch eine Vorzündkammer ersetzt, in der Kohlenstaub mit Sauerstoff oder Luft vorgezündet wird. Diese Vorzündkammer ist so ausgelegt, daß ein Teil des feinteiligen Kohlenstoffs verbrennt und sich in ihr Temperaturen von rd. 1600 bis rd. 2000° C einstellen. Aus dieser Vorzündkammer treten dann Verbrennungsgase und vorgeheizter Kohlenstaub in den Schachtofen ein.

Beim erfindungsgemäßen Verfahren werden nun ausgewählte Zuschlagstoffe eingesetzt, die wenigstens einige Bestandteile der aus den Mineralien in der Kohle resultierenden Asche oder Schlacke durch chemische Reaktion binden, wodurch in einer Sekundärreaktion chemischtechnisch verwertbare Produkte, sog. Wertstoffe, gewonnen werden. Dabei werden die Zuschlagstoffe durch das heiße Synthesegas auf die erforderliche Temperatur vorerhitzt und der Energiebedarf endothermer Sekundär-Reaktionen durch einen Teil der bei der autothermen Vergasung freigesetzten Energie völlig gedeckt. Das Sekundärprodukt wird geschmolzen aus dem Reaktorraum abgezogen.

Bekanntermaßen sind vornehmlich die fossilen festen Kohlenstoffträger, wie Stein- und Braunkohle oder deren Kokse mit oft sehr unterschiedlichen Gehalten an Ballaststoff versehen. Der Ballaststoff besteht hauptsächlich aus einer Vielzahl von Mineralien, die z. T. in inniger Vermischung mit dem Kohlenstoff vorliegen und als Glührückstand die Asche bilden. In der Asche lassen sich mehr als 35 Elemente nachweisen, weshalb von jeher Interesse an einer Rohstoffgewinnung aus der Asche bestand. Bis heute hat sich jedoch kein dementsprechendes Verfahren durchgesetzt. Verantwortlich dafür ist vor allem der in der Regel sehr geringe Gehalt der Aschen an wertvollen, stahlveredelnden Metallen, die ihrerseits bisher im Vordergrund des Interesses standen. Die Hauptminerale blieben dabei weitgehend außer acht. Obwohl Flugasche und granulierte Asche in der Baustoffindustrie verwertbar sind, schaffen die bereits heute in Kraftwerken anfallenden Schlacke- und Aschemengen, die bei Steinkohle nur bis zu etwa 75% und bei Braunkohle lediglich zu rund 8% einer Verwertung zugeführt werden können, große Probleme. Diese werden noch drückender, wenn in Zukunft großtechnische Kohlevergasungsanlagen in Betrieb genommen werden, da einerseits der hohe Anreicherungsgrad an Schwermetallen und Radionucliden bestimmte Anwendungsgebiete der Aschen- bzw. Schlacken, die früher vorgeschlagen wurden, ausschließt, andererseits die Kapazität in der Verwertung ausgeschöpft ist und der Asche- und Schlackeausstoß durch die Kohlevergasung noch vergrößert wird.

Bei den bekannten Kohlevergasungsanlagen herrschen am Ort der Asche- und Schlackebildung im allgemeinen sehr hohe Temperaturen. Gleichzeitig liegt die Asche bzw. Schlacke in der Regel geschmolzen vor. Die Minerale in der Kohle, hauptsächlich Ilit und Kaolinit als Tonminerale, Serizid als Glimmermineral, Pyrit, Markasit, Limonit, Hämatit und Eisenspat als Eisenminerale, Braunspat, Ankerit, Kalkspat und Dolomit als Carbonspäte, Apatit als Phosphormineral und Quarz, daneben noch eine Reihe weiterer, jedoch seltener zu findender Oxide, Hydroxide und Sulfide sowie bestimmte Salze, zeigen je nach Aufheizgeschwindigkeit und Atmosphäre unterschiedliches Verhalten. Allgemein werden zunächst beim Erhitzen adsorbiertes Wasser, danach Kristallwasser, Wasser aus OH-Gruppen und Kohlendioxid aus Carbonaten ausgetrieben. Bei Temperaturen oberhalb 1500°C findet ein deutlicher Transport etlicher Oxide über die Gasphase unter Bildung von Gaskomplexen, Monoxiden oder Sulfiden statt, die nach Rückreaktion zur Aerosolbildung führen. Besonders trifft dies bei Siliciumdioxid, Aluminiumoxid und Eisenoxid zu. Daneben zerfallen die Minerale bei den hohen Aufheizgeschwindigkeiten weitgehend in amorphe Oxide, die von dem Synthesegasstrom mitgerissen werden. Ein großer Teil des Siliciumdioxids schmilzt und bildet später eine glasartige Phase. Unter stark reduzierenden Bedingungen, vor allen Dingen bei Anwesenheit von Kohlenstoff, kann auch Reduktion der Metalloxide zu Metallen beobachtet werden. Bevorzugt wird das Auftreten von Eisen, aber auch die Bildung von Calciumcarbid, das ebenfalls intermediär über eine metallische Stufe gebildet wird, oder das Auftreten von Ferrosilicium beobachtet.

Beim erfindungsgemäßen Verfahren werden diese Eigenschaften der mineralischen Bestandteile der kohlenstoffreichen Materialien, insbesondere der Kohle, in günstiger Weise kombiniert und ausgenutzt.

Dadurch werden

1. große Anteile der Schlacke und Asche chemisch umgewandelt und in chemisch-technische Produkte überführt,
2. einzelne Komponenten, z. B. $Al_2O_3$, in einer Staubfraktion angereichert, die dieser gute hydraulische Bindemitteleigenschaften verleihen,
3. die auf einem besonders hohen Temperaturniveau anfallende Vergasungswärme für Hochtemperaturreaktionen direkt ausgenutzt,
4. der Kohlendioxidgehalt des Synthesegases minimal gehalten und

5. große Teile des sonst aus dem Reaktor austretenden Flugstaubs im Reaktor zurückgehalten und ebenfalls durch chemische Reaktion umgewandelt.

Dies wird dadurch erreicht, daß das heiße Synthesegas unmittelbar nach seiner Entstehung direkt in eine Schüttung aus einem Zuschlagstoffgemisch geleitet wird. Das Zuschlagstoffgemisch enthält ein Reduktionsmittel, insbesondere Kohlenstoff in Form von Koks-Schwelkoks, Anthrazit, Holzkohle oder Torfkoks, zur Schlackereduktion. Dabei werden die z. T. flüssigen Schlacke- bzw. Flugaschepartikel größtenteils auf der Oberfläche der Schüttschicht abgeschieden und bilden darauf einen Oberflächenfilm. Hier tritt nun infolge der hohen Temperaturen Reaktion ein und es bildet sich eine Reduktionszone aus. Unter Verbrauch der Zuschlagstoffmischung bildet sich das gewünschte Sekundärprodukt. Dies kann z. B. Ferrosilizium oder Calciumcarbid sein. Die Bemessung der spezifischen Zuschlagstoffmengen bezogen auf die eingesetzte Menge des kohlenstoffreichen Materials, kann in weiten Grenzen variiert werden. Vernünftigerweise gibt die Menge der umzusetzenden Schlüsselkomponente in der Asche über die Stöchiometrie der Umwandlungsreaktion die Untergrenze der Mengen an Zuschlagstoffen vor (vgl. Beispiel 1), während die bei der autothermen Vergasungsreaktion freigesetzte Wärmemenge über den Energieverbrauch der Umwandlungsreaktion die Obergrenze der Mengen an Zuschlagstoffen darstellt (vgl. Beispiel 2).

Im einzelnen betrifft die Erfindung nunmehr ein Verfahren zur Herstellung von Synthesegas ($CO + H_2$) durch autotherme Vergasung feinteiliger kohlenstoffreicher Materialien mit Sauerstoff, ggf. in Gegenwart von Zusatzgasen, welches dadurch gekennzeichnet ist, daß man Kohlenstaub mit einer Teilchengröße bis 0,1 mm zusammen mit dem Sauerstoff und ggf. einem Zusatzgas in eine auf 2000 bis 2600°C gehaltene leere Vergasungszone eindüst, daß man das gebildete flugaschehaltige rohr Synthesegas mit der ihm innewohnenden thermischen Energie durch eine mit den Ausgangsstoffen für eine endotherme carbothermische Reduktion zur Gewinnung von Ferrosilicium, Calciumcarbid, elementarem Phasphar oder metallischem Eisen gefüllte Reduktionszone und, vermehrt durch das bei der carbothermischen Reduktion entstandene Synthesegas, durch eine daran anschließende, mit den gleichen Ausgangsstoffen gefüllte Vorheizzone hindurchführt und mit einer Temperatur von 300—1500°C zur Reinigung und Konvertierung abzieht, und daß man unterhalb der Reduktionszone als Reaktionsprodukt der carbothermischen Reduktion Ferrosilicium, Calciumcarbid oder metallisches Eisen sowie entstandene Schlacke schmelzflüssig aus einer Sammel- und Nachreaktionszone entnimmt.

Das Verfahren der Erfindung kann weiterhin bevorzugt und wahlweise dadurch gekennzeichnet sein, daß

a) man den Ascheanteil des eingedüsten Kohlenstaubs sowie des für die carbothermische Reduktion eingesetzten Kokses zumindest teilweise als Reaktionspartner bei der carbothermischen Reduktion einsetzt;

b) man das die Vorheizzone verlassende rohe Synthesegas von Staub und Asche befreit und diese Feststoffe zumindest teilweise im Kreislauf zusammen mit frischem Kohlenstaub erneut über die Vergasungszone in die Reduktionszone eindüst;

c) man die Ausgangsstoffe für die carbothermische Reduktion in einer Korngröße von 10 bis 20 mm oder von 20—40 mm einsetzt;

d) man bei der carbothermischen Gewinnung von Ferrosilicium bei 1300 bis 1800°C die Vorheizzone und die Reduktionszone mit Koks, Eisenschrott und ggf. Quarz beschickt;

e) man bei der carbothermischen Gewinnung von Calciumcarbid bei 1800°C bis 2300°C die Vorheizzone und die Reduktionszone mit Koks oder calciniertem Anthrazit und Kalk beschickt;

f) man bei der carbothermischen Gewinnung von elementarem Phosphor bei 1300 bis 1700°C die Vorheizzone und die Reduktionszone mit Koks, Calciumphosphat und Quarz beschickt;

g) man bei der carbothermischen Gewinnung von metallischem Eisen bei 1300 bis 1800°C die Vorheizzone und die Reduktionszone mit Koks und oxidischem Eisenerz beschickt;

h) man als Zusatzgas CO, $CO_2$, $N_2$, Wasserdampf oder im Kreislauf geführtes Synthesegas einsetzt;

i) man in der Vergasungszone mit einem stöchiometrischen Sauerstoffüberschuß in Bezug auf die Oxidation zu CO arbeitet.

Die Reduktionszone kann seitlich mit mindestens 2 Vergasungszonen und nach oben zu mit der Vorheizzone in offener Verbindung stehen. Im übrigen kann man eine Komponente der Ausgangsstoffe für die carbothermische Reduktion gezielt entlang der inneren Wandung der Vorheizzone und der Reduktionszone zudosieren.

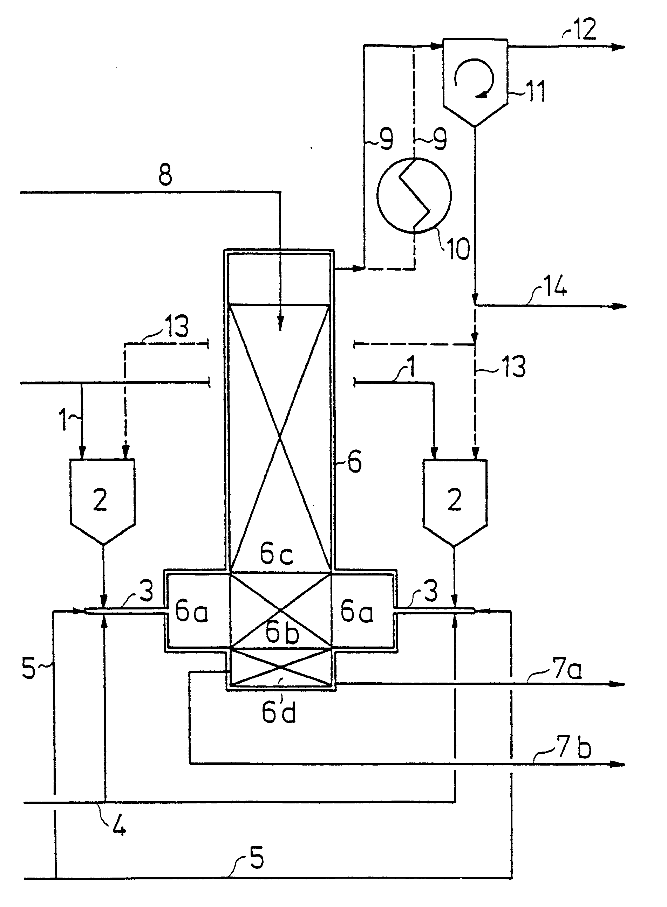

Ferner umfaßt die Erfindung auch eine Vorrichtung (vgl. Figur 1) zur Durchführung des neuen Verfahrens, die gekennzeichnet ist durch einen Schachtofen (6), der von oben nach unten aus einer langgestreckten Vorheizkammer (6c), einer Reduktionskammer (6b) und einer Nachreaktionskammer (6d), die offen ineinander übergehen, besteht; mindestens zwei gegenüberliegende, seitlich an die Reduktionskammer (6b) angrenzende und mit ihr offen verbundene, zylindrische Vergasungskammern (6a), in welche je eine Düse (3) für die gemeinsame Zuführung von Kohlenstaub, Sauerstoff und evtl. Zusatzgasen eingelassen ist; eine Zuführung (8) für die Ausgangsstoffe der carbothermischen Reduktion und eine Abzugsleitung (9, 12) für rohes Synthesegas am Kopf des Schachtofens (6); mindestens eine Abzugsleitung (7a, 7b) an der Nachreaktionskammer (6d) zum Abzug von geschmolzener Schlacke und schmelzflüssigem Reaktionsprodukt aus der carbothermischen Reduktion.

Die Vorrichtung der Erfindung kann weiterhin bevorzugt und wahlweise gekennzeichnet sein durch

a) je einen jeder Düse (3) vorgeschalteten Zwischenbunker (2) für Kohlenstaub; eine Entstaubungseinrichtung (11) in der Abzugsleitung (9, 12) für rohes Synthesegas und Rückführleitungen (13) für den abgeschiedenen mineralischen Staub von der Entstaubungseinrichtung (11) zu den einzelnen Zwischenbunkern (2);

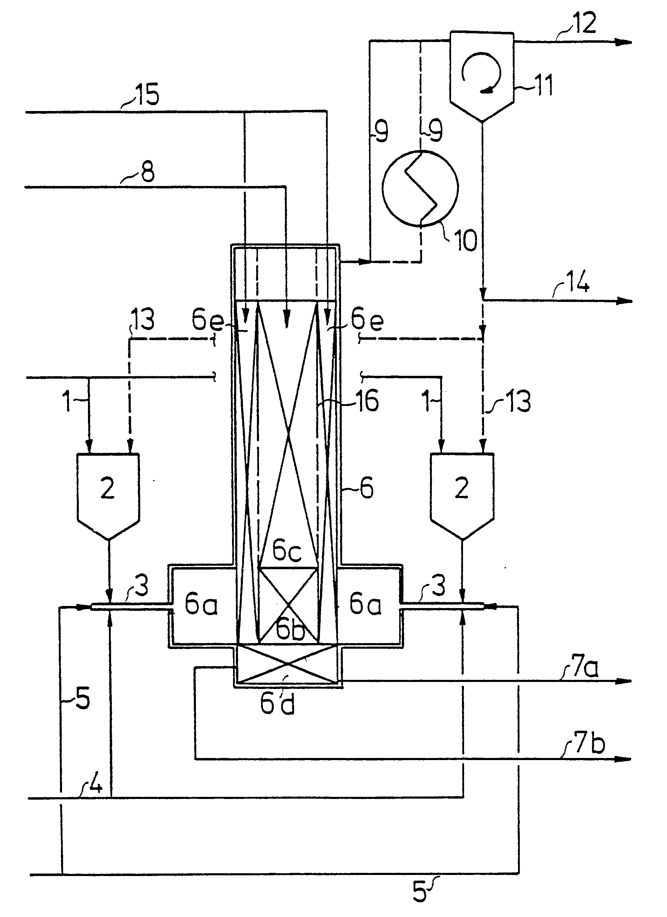

b) im oberen Teil des Schachtofens (6) senkrecht und kreisförmig angeordnete Trennbleche (16) zur Abgrenzung eines Ringraumes (6e) zwischen den Trennblechen (16) und der Innenwandung des Schachtofens (6), sowie durch mindestens 2 Transportleitungen (15) für die Zufuhr einer Komponente der Ausgangsstoffe für die carbothermische Reduktion durch den Ringraum (6e) unter Ausbildung eines die Innenwandung des Schachtofens (6) schützenden ringförmigen Schüttungsmantels (vgl. Figur 2).

Das erfindungsgemäße Verfahren läßt sich in mannigfaltiger Weise verwirklichen. Anhand der Figuren 1 und 2 der Zeichnungen seien Verfahren und Vorrichtung der Erfindung näher erläutert, wobei das kohlenstoffreiche Material, das zur Vergasung bestimmt ist (Kohlenstaub), im folgenden kurz mit Vergasungskohle bezeichnet wird.

### Figur 1

Feinst gemahlene und vorgetrocknete Vergasungskohle (Teilchendurchmesser: 90% ≤ 90 μm) wird über die Zuleitungen (1) und die Zwischenbunker (2) auf je einen Staubvergasungsbrenner (3) gegeben, wo sie mit Sauerstoff aus Leitung (4) und ggf. Zusatzgas, insbesondere Kohlendioxid, Wasserdampf, Kohlenmonoxid oder Rohsynthesegas, aus Leitung (5) in die Vergasungszone (6a) des erfindungsgemäßen Reaktorraumes (Schachtofen) (6) injiziert und autotherm vergast wird. Dabei kann im Sinne der Erfindung Sauerstoff und/oder Zusatzgas als Trägergas für die Vergasungskohle angewendet werden. Der Reaktorraum (Schachtofen) (6) ist erfindungsgemäß so ausgestaltet, daß direkt an die Vergasungszone (6a) zur Achse hin eine Reduktionszone (6b) angrenzt, die aus einer Schüttschicht der jeweiligen Zuschlagstoffmischung besteht. Dabei ist die Körnung der Zuschlagstoffe dieser Mischung vorzugsweise 10—20 mm oder 20—40 mm. Oberhalb der Schüttschicht ist eine Vorheizzone (6c) angeordnet, die ebenfalls eine Schüttschicht aus Zuschlagstoffmischung enthält, so daß durch Schwerkrafteinfluß die Zuschlagstoffmischung entsprechend dem Verbrauch in der Reduktionszone (6b) nach unten wandert. Unterhalb der Reduktionszone (6b) ist eine Sammel- und Nachreaktionszone (6d) angeordnet, in die aus der Reduktionszone (6b) abtropfende, geschmolzene Schlacke und Reduktionsprodukt hineintropft. Die Sammel- und Nachreaktionszone (6d) ist mit mindestens einer verschließbaren Abstichöffnung versehen, so daß geschmolzene Schlacke und geschmolzenes Reduktionsprodukt über die Leitungen (7a) und/oder (7b) abgezogen werden können. Anschließend wird granuliert oder in Gefäßen abgekühlt.

Während in der Vergasungszone (6a) die Temperatur mittels des Zusatzgases auf etwa 2000—2600° C eingestellt wird, ergibt sich in der Reduktionszone (6b) eine Temperatur von 1300—2300° C. Die Zuschlagstoffmischung enthält ein Reduktionsmittel, bevorzugt Koks, Schwelkoks, Anthrazit, Holzkohle oder Torfkoks, und für die gewünschte Reaktion spezifische weitere Materialien. Flüchtige Bestandteile werden in den Reduktionsmitteln nur soweit zugelassen, wie deren Entgasungs- oder Reaktionsprodukte (z. B. Kohlenwasserstoffe, Teer) die Weiterverarbeitung des gewonnenen Synthesegases nicht stören. Gegebenenfalls können solche Reduktionsmittel zuvor calciniert werden. Die in der Vergasungszone (6a) entstehenden Vergasungsprodukte werden zwangsweise durch die Reduktionszone (6b) und die Vorheizzone (6c) geleitet, wo sie die ihnen innewohnende Wärme an die Zuschlagstoffmischung abgeben und selbst am Oberteil des Reaktionsraumes mit Temperaturen zwischen rund 350 und 1500° C austreten. Je nach Anforderung an die Menge des erzeugten Reduktionsproduktes und/oder die gewünschte Austrittstemperatur des Rohgases kann die Zuschlagstoffmischung nach Menge und Zusammensetzung entsprechend dosiert werden. Minimale Rohsynthesegastemperaturen ergeben sich dann, wenn die Vorheizzone so ausgestaltet ist, daß die zum Wärmeaustausch zur Verfügung stehende Schüttungsoberfläche sehr groß wird und der Energieverbrauch durch Reduktionsreaktionen der Energiefreisetzung durch die autotherme Vergasungsreaktion entspricht. Am Oberteil des Reaktionsraumes ist eine geeignete Vorrichtung zum Einbringen der über (8) zugeführten Zuschlagstoffmischung vorgesehen, vorzugsweise in Form von Schurren, die gegen Gas abgedichtet werden, oder von Gichtverschlüssen. In der Leitung (9) kann bei hohen Austrittstemperaturen des Rohsynthesegases ein Abhitzekessel (10) vorgesehen sein, so daß das Rohsynthesegas in der Heißentstaubung (11) entstaubt und über Leitung (12) abgeleitet werden kann. Der aus der Heißentstaubung (11) abgezogene Staub kann entweder über die Leitungen (13) und Zwischenbunker (2) wieder in die Vergasungszone (6a) und die Reduktionszone (6b) zurückgeführt oder über die Leitung (14) entnommen oder in bestimmten Mengenverhältnissen gleichzeitig über (13) und (14) geführt werden. Auf diese Weise kann man entweder alle Restasche und Ballaststoffe aus den Einsatzmaterialien als Schlacke über die Leitungen (7a) bzw. (7b) oder Teile davon als Staub aus (11) über Leitung (14) abziehen.

## Figur 2

In weiterer Ausgestaltung des erfindungsgemäßen Verfahrens kann im Unterschied zu Figur 1 vorgesehen sein, eine Komponente der Zuschlagstoffmischung über Leitung (15) von der restlichen Zuschlagstoffmischung getrennt in den Reaktorraum einzubringen und mit Hilfseinbauten (16) eine säulen- bzw. zylindermantelartige Verteilung der Komponenten in der Schüttung zu erreichen.

Die Vergasungszone kann mit überschüssigem Sauerstoff beschickt werden, wodurch sich höhere Gastemperaturen ergeben. Außerdem übernimmt der äußere Schüttungsmantel (6e) eine Schutzfunktion für die innere Wandung des Reaktorraums.

In den nachfolgenden Beispielen beziehen sich die Volumenangaben auf den Normalzustand bei 273 K und 1,013 bar.

## Beispiel 1

Benötigt wird Synthesegas für die Erzeugung von rund 52,5 t/h Methanol. Dazu müssen rund 121 000 m$^3$/h CO + H$_2$ erzeugt werden, was mit der erfindungsgemäßen Umwandlung des Siliciumdioxids der Asche zu Ferrosilicium 45% Si durch autotherme Vergasung von vorgetrockneter, feinstgemahlener ($\varnothing$ = 90% ≤ 90 µm), ungewaschener roher Feinkohle unter Zusatz von vorgetrocknetem Hochofenkoks Brech 4 ($\varnothing$ 10—20 mm) und Eisenschrott (95% Fe) geschehen soll.

Dazu werden entsprechend Figur 1 über Leitung (1) rund 60 t/h Feinkohlenstaub ($\varnothing$ 90% ≤ 90 µm) in die Bunker (2) gefördert und von dort in Staubvergasungsbrennern (3) zusammen mit rund 39 290 m$^3$/h 99,9%igem Sauerstoff aus Leitung (4) vergast. Über die Leitung (8) ist der Schachtofen (6) mit einer Schüttung aus einem Gemisch ($\varnothing$ = 10—20 mm) aus Koks (zur Reduktion von SiO$_2$) und zerkleinertem Eisenschrott versehen worden, wovon stündlich etwa 4,17 t (2,08 t/h Koks und 2,09 t/h Eisenschrott) verbraucht werden. Während in der Vergasungszone (6a) unter Zusatz von rund 5000 m$^3$/h Kohlendioxid aus Leitung (5) als Zusatzgas bei Temperaturen von rund 2000—2300° C Synthesegas gebildet wird, tritt in der Reduktionszone (6b) Schlacke-Reduktion ein. Dabei wird sowohl SiO$_2$ als auch Fe$_2$O$_3$ reduziert und bei rund 1600° C Ferrosilicium gebildet. Dieses fällt geschmolzen an und tropft durch die Schüttung in die Sammel- und Nachreaktionszone (6d), von wo stündlich rund 4,2 t Ferrosilicium 45% Si über (7a) bzw. (7b) abgezogen werden. Das Synthesegas wird danach durch die Schüttung der Zuschlagstoffmischung geleitet und heizt diese in der Vorheizzone (6c) auf etwa 1500° C vor. Dabei wird ein Teil der erzeugten Flugasche von der Schüttung zurückgehalten und wieder der Reduktionszone (6b) zugeführt. Das Synthesegas entweicht über Leitung (9), den Abhitzekessel (10) und die Heißentstaubung (11). Über Leitung (12) werden rund 122 100 m³/h vorentstaubtes Rohsynthesegas (rund 121 000 m³/h CO + H₂) mit der Zusammensetzung: rund 76—77 Vol.-% CO, rund 22 Vol.-% H₂ und rund 1—2 Vol.-% N₂, CO₂ abgezogen. Der in (11) abgeschiedene Staub wird teilweise über (13) zurückgeführt. Der über (14) entnommene Staubanteil enthält rund 57 Gew.-% Al₂O₃ neben hauptsächlich CaO und MgO. Über die Rückstaubmenge kann auch die Menge der aus (6d) über (7a) bzw. (7b) mitabgezogenen Schlacke beeinflußt werden. So fallen insgesamt rund 4,2 t/h Staub und Schlacke an.

Bei einer üblichen Flugstromvergasung würde der Anfall von Staub und Schlacke rund 7,9 t/h betragen. Der Schlacke- und Ascheausstoß kann also mit dem erfindungsgemäßen Verfahren um rund 42% gegenüber dem Stand der Technik gesenkt werden. Gleichzeitig wird durch Steigerung des Al₂O₃-Anteils in der Flugstaubfraktion (Leitung 14) ein als Bindemittel verwendbares hydraulisches Produkt erzeugt sowie Ferrosilicium 45% Si als gewünschtes, wertvolles Reduktionsprodukt.

### Beispiel 2

Die Ferrosilicium-Erzeugung ist ein Hochtemperaturprozeß, der bisher in elektrothermischen Öfen durchgeführt wird. Das erfindungsgemäße Verfahren läßt sich auch in der Weise ausdehnen, daß man die Zuschlagstoffmischung um Quarzit erweitert und damit die Ferrosiliciummenge erhöht. Auf diese Weise kann der überwiegende Teil der Vergasungswärme in Form von chemisch gebundener Energie gewonnen werden.

Ein Gasgenerator, der nach dem erfindungsgemäßen Verfahren Rohsynthesegas für den Betrieb einer 1000 tato Methanolanlage liefert, produziert stündlich rund 95 800 m³ CO + H₂. Dazu werden entsprechend Figur 1 über die Leitung (1) und die Bunker (2) 46,73 t/h ungewaschene, vorgetrocknete und feinstgemahlene (Ø = 90% ⩽ 90 μm) rohe Feinkohle zu den Staubvergasungsbrennern (3) geleitet und mit rund 32 560 m³ Sauerstoff, 99,9%ig, jedoch ohne Zusatzgas, bei 2200° C bis 2600° C autotherm vergast. Über Leitung (8) ist der Schachtofen (6) mit der Zuschlagstoffmischung (Ø = 10—20 mm), bestehend aus rund 5,15 t/h Hochofenkoks Brech 4 (vorgetrocknet), rund 7,41 t/h gebrochenem Quarzit (95%ig) und rund 0,67 t/h Eisenschrott (stückig, ca. 95% Fe) beschickt worden.

In der Reduktionszone (6b) herrschen Bedingungen wie im Beispiel 1. Dort werden rund 5,89 t/h Ferrosilicium 75% Si gebildet, das geschmolzen in die Sammel- und Nachreaktionszone (6d) fließt und von dort über Leitung (7a) bzw. (7b) abgezogen wird, wobei der Eisengehalt des Ferrosiliciums nicht nur aus dem Eisenschrott, sondern auch aus den Eisenmineralien in der Feinkohle und im Hochofenkoks stammt. Das Synthesegas und das durch Reduktion freigesetzte CO strömen in (6c) durch die Schüttung aus Zuschlagstoffmischung und kühlen sich dort auf rund 350—450° C ab. Danach werden über Leitung (9), Entstaubung (11) und Leitung (12) rund 97 050 m³/h vorentstaubtes Rohsynthesegas (rund 95 800 m³/h CO + H₂) mit der Zusammensetzung: rund 77 Vol.-% CO, rund 21 Vol.-% H₂ und rund 2 Vol.-% N₂, CO₂ abgezogen. Der Flugstaub, in dem wie in Beispiel 1 wieder Al₂O₃ angereichert ist, kann wie in Beispiel 1 über (13) und (2) in variablen Anteilen zu den Staubvergasungsbrennern (3) zurückgeführt bzw. über (14) entnommen werden. Zusammen fallen rund 3,49 t/h Staub und Schlacke an.

Dies sind im Vergleich zu einer herkömmlichen Flugstromvergasung nur rund 52% des normalen Staub- und Schlackeausstoßes. Zusätzlich werden erfindungsgemäß noch rund 5,89 t/h Ferrosilicium 75% Si als gewünschtes wertvolles Reduktionsprodukt erzeugt.

### Beispiel 3

Außer Ferrosilicium kann auch das sonst in elektrothermischen Öfen hergestellte Calciumcarbid in einer Kohlevergasung nach dem erfindungsgemäßen Verfahren als Reduktionsprodukt gewonnen werden.

Als Vergasungskohle wird amerikanische Faserkohle eingesetzt, die in rohem Zustand etwa 11,5 Gew.-% Asche und 2,8 Gew.-% Wasser enthält. Der brennbare Anteil dieser Faserkohle enthält 85,55 Gew.-% C, 5,23 Gew.-% H, 6,24 Gew.-% O, 1,52 Gew.-% N, 1,46 Gew.-% S. Der Calciumoxidgehalt der Asche ist mit ca. 50 Gew.-% ziemlich hoch. Als Reduktionsmittel dient calcinierter Anthrazit.

Setzt man analog zu den vorstehenden Beispielen 106,91 t/h vorgetrockneten, auf 90% kleiner 90 μm feinstgemahlenen Kohlenstaub ein und vergast ihn bei 2200°—2600° C mit rund 70 720 m³/h Sauerstoff 99,9%ig, so lassen sich in der Reduktionszone (6b) des erfindungsgemäßen Verfahrens aus der Zuschlagstoffmischung, bestehend aus rund 48,55 t/h gebranntem Kalk 96%ig und rund 36,06 t/h calciniertem Anthrazit bei etwa 2000° C rund 60 t/h 80%iges Calciumcarbid erschmelzen, wobei über (14) rund 10,82 t/h Staub abgezogen werden. Gleichzeitig entstehen rund 231 000 m³/h vorentstaubtes Rohsynthesegas, das den Schachtofen (6) mit rund 400° C verläßt und etwa 73—74 Vol.-% CO, 24—25 Vol.-% H₂ und rund 1—3 Vol.-% N₂, CO₂ enthält. Besonders vorteilhaft erweist sich der hohe Gehalt an basischen Zuschlagstoffen in der Mischung, so daß das Rohsynthesegas praktisch schwefelfrei ist.

**Patentansprüche**

1. Verfahren zur Herstellung von Synthesegas ($CO + H_2$) durch autotherme Vergasung feinteiliger kohlenstoffreicher Materialien mit Sauerstoff, ggf. in Gegenwart von Zusatzgasen, dadurch gekennzeichnet, daß man Kohlenstaub mit einer Teilchengröße bis 0,1 mm zusammen mit dem Sauerstoff und ggf. einem Zusatzgas in eine auf 2000 bis 2600° C gehaltene leere Vergasungszone eindüst, daß man das gebildete flugaschehaltige rohe Synthesegas mit der ihm innewohnenden thermischen Energie durch eine mit den Ausgangsstoffen für eine endotherme carbothermische Reduktion zur Gewinnung von Ferrosilicium, Calciumcarbid, elementarem Phosphor oder metallischem Eisen gefüllte Reduktionszone und, vermehrt durch das bei der carbothermischen Reduktion entstandene Synthesegas, durch eine daran anschließende, mit den gleichen Ausgangsstoffen gefüllte Vorheizzone hindurchführt und mit einer Temperatur von 300 — 1500° C zur Reinigung und Konvertierung abzieht, und daß man unterhalb der Reduktionszone als Reaktionsprodukt der carbothermischen Reduktion Ferrosilicium, Calciumcarbid oder metallisches Eisen sowie entstandene Schlacke schmelzflüssig aus einer Sammel- und Nachreaktionszone entnimmt.

2. Verfahren nach Anspruch 1, dadurch gekennzeichnet, daß man den Ascheanteil des eingedüsten Kohlenstaubs sowie des für die carbothermische Reduktion eingesetzten Kokses zumindest teilweise als Reaktionspartner bei der carbothermischen Reduktion einsetzt.

3. Verfahren nach Anspruch 1 oder 2, dadurch gekennzeichnet, daß man das die Vorheizzone verlassende rohe Synthesegas von Staub und Asche befreit und diese Feststoffe zumindest teilweise im Kreislauf zusammen mit frischem Kohlenstaub erneut über die Vergasungszone in die Reduktionszone eindüst.

4. Verfahren nach einem der Ansprüche 1 — 3, dadurch gekennzeichnet, daß man die Ausgangsstoffe für die carbothermische Reduktion in einer Korngröße von 10 — 20 mm oder von 20 — 40 mm einsetzt.

5. Verfahren nach einem der Ansprüche 1 — 4, dadurch gekennzeichnet, daß man bei der carbothermischen Gewinnung von Ferrosilicium bei 1300 bis 1800° C die Vorheizzone und die Reduktionszone mit Koks, Eisenschrott und ggf. Quarz beschickt.

6. Verfahren nach einem der Ansprüche 1 — 4, dadurch gekennzeichnet, daß man bei der carbothermischen Gewinnung von Calciumcarbid bei 1800° C bis 2300° C die Vorheizzone und die Reduktionszone mit Koks oder calciniertem Anthrazit und Kalk beschickt.

7. Verfahren nach einem der Ansprüche 1 — 4, dadurch gekennzeichnet, daß man bei der carbothermischen Gewinnung von elementarem Phosphor bei 1300 bis 1700° C die Vorheizzone und die Reduktionszone mit Koks, Calciumphosphat und Quarz beschickt.

8. Verfahren nach einem der Ansprüche 1 — 4, dadurch gekennzeichnet, daß man bei der carbothermischen Gewinnung von metallischem Eisen bei 1300 bis 1800° C die Vorheizzone und die Reduktionszone mit Koks und oxidischem Eisenerz beschickt.

9. Verfahren nach einem der Ansprüche 1 — 8, dadurch gekennzeichnet, daß man als Zusatzgas CO, $CO_2$, $N_2$, Wasserdampf oder im Kreislauf geführtes Synthesegas einsetzt.

10. Verfahren nach einem der Ansprüche 1 — 9, dadurch gekennzeichnet, daß man in der Vergasungszone mit einem stöchiometrischen Sauerstoffüberschuß in Bezug auf die Oxidation zu CO arbeitet.

11. Vorrichtung zur Durchführung des Verfahrens gemäß einem der Ansprüche 1 — 10, gekennzeichnet durch einen Schachtofen (6), der von oben nach unten aus einer langgestreckten Vorheizkammer (6c), einer Reduktionskammer (6b) und einer Nachreaktionskammer (6d), die offen ineinander übergehen, besteht; mindestens zwei gegenüberliegende, seitlich an die Reduktionskammer (6b) angrenzende und mit ihr offen verbundene, zylindrische Vergasungskammern (6a), in welche je eine Düse (3) für die gemeinsame Zuführung von Kohlenstaub, Sauerstoff und evtl. Zusatzgasen eingelassen ist; eine Zuführung (8) für die Ausgangsstoffe der carbothermischen Reduktion und eine Abzugsleitung (9, 12) · für rohes Synthesegas am Kopf des Schachtofens (6); mindestens eine Abzugsleitung (7a, 7b) an der Nachreaktionskammer (6d) zum Abzug von geschmolzener Schlacke und schmelzflüssigem Reaktionsprodukt aus der carbothermischen Reduktion.

12. Vorrichtung gemäß Anspruch 11, gekennzeichnet durch je einen jeder Düse (3) vorgeschalteten Zwischenbunker (2) für Kohlenstaub; eine Entstaubungseinrichtung (11) in der Abzugsleitung (9, 12) für rohes Synthesegas und Rückführleitungen (13) für den abgeschiedenen mineralischen Staub von der Entstaubungseinrichtung (11) zu den einzelnen Zwischenbunkern (2).

13. Vorrichtung gemäß Anspruch 11 oder 12, gekennzeichnet durch im oberen Teil des Schachtofens (6) senkrecht und kreisförmig angeordnete Trennbleche (16) zur Abgrenzung eines Ringraumes (6e) zwischen den Trennblechen (16) und der Innenwandung des Schachtofens (6), sowie durch mindestens 2 Transportleitungen (15) für die Zufuhr einer Komponente der Ausgangsstoffe für die carbothermische Reduktion durch den Ringraum (6e) unter Ausbildung eines die Innenwandung des Schachtofens (6) schützenden ringförmigen Schüttungsmantels.

**Claims**

1. Process for generating synthesis gas ($CO + H_2$) by subjecting fine particulate materials rich in carbon to an autothermal gasification reaction with oxygen optionally in the presence of an additional gas, which comprises: injecting coal dust having a particle size of up to 0,1 mm and the oxygen and optionally the additional gas into an empty gasification zone maintained at 2000 to 2600°C; passing the resulting flue dust-containing crude synthesis gas with ist inherent thermal energy through a reduction zone having the feed materials necessary for initiating an endothermal carbothermal reduction with formation of ferrosilicon, calcium carbide, elementary phosphorus or metallic iron placed therein, and then passing it and the synthesis gas produced during the carbothermal reduction through a directly connected preheating zone having the same materials as this latter zone placed therein; removing the synthesis gas at a temperature of 300 up to 1500°C for purification and conversion; and removing, below the reduction zone, as fused reaction product originating from the carbothermal reduction, ferrosilicon, calcium carbide or metallic iron and fused slag from a collecting and post-reaction zone.

2. Process as claimed in claim 1, wherein the proportion of ash contained in the injected coal dust and in the coke used for initiating the carbothermal reduction are at least partially used as reactants in the carbothermal reduction.

3. Process as claimed in claim 1 or 2, wherein the crude synthesis gas coming from the preheating zone is freed from dust and flue dust, and these two solid components are at least partially recycled and injected together with fresh coal dust into the reduction zone via the gasinfication zone.

4. Process as claimed in any of claims 1—3, wherein the feed materials for initiating the carbothermal reduction are used in the form of particles with a size of 10 up to 20 mm or 20 up to 40 mm.

5. Process as claimed in any of claims 1—4, wherein the preheating zone and reduction zone are fed with coke, iron scrap and optionally quartz, ferrosilicon being obtained as the reaction product of the carbothermal reduction at 1300 up to 1800°C.

6. Process as claimed in any of claims 1—4, wherein the preheating zone and reduction zone are fed with coke or calcined anthracite and lime, calcium carbide being obtained as the reaction product of the carbothermal reduction at 1800 up to 2300°C.

7. Process as claimed in any of claims 1—4, wherein the preheating zone and reduction zone are fed with coke, calcium phosphate and quartz, elementary phosphorus being obtained as the reaction product of the carbothermal reduction at 1300 up to 1700°C.

8. Process as claimed in any of claims 1—4, wherein the preheating zone and reduction zone are fed with coke and oxidic iron ore, metallic iron being obtained as the reaction product of the carbothermal reduction at 1300 up to 1800°C.

9. Process as claimed in any of claims 1—8, wherein the additional gas is CO, $CO_2$, $N_2$, steam or cycled synthesis gas.

10. Process as claimed in any of claims 1—9, wherein oxygen is used in a stoichiometric excess, based on the oxidation to CO, in the gasification zone.

11. An apparatus for carrying out the process as claimed in any one of claims 1—10, comprising: a shaft furnace (6) which includes from above to below: an elongated preheating chamber (6c), a reduction chamber (6b), and a post-reaction chamber (6d), each of which opens into the other; at least two opposed cylindrical gasification chambers (6a) laterally adjoining the reduction chamber (6b) and being openly-connected thereto, each of the gasification chambers being provided with a nozzle structure (3) for the joint admission of coal dust, oxygen and optionally an additional gas; an inlet (8) for admission of feed materials initiating the carbothermal reduction and an outlet (9, 12) for the removal of crude synthesis gas at the hea of the shaft furnace (6); and at least one outlet (7a, 7b) for the removal of fused slag and fused reaction product originating from the carbothermal reduction, from the post-reaction chamber (6d).

12. Apparatus as claimed in claim 11, further comprising an intermediate carbon-dust-receiving bunker (2) disposed upstream of each said nozzle structure (3); a dust precipitating means (11) disposed in the crude synthesis gas outlets (9, 12); and lines (13) permitting precipitated mineral dust to be recycled from the dust precipitating means (11) to said intermediate bunkers (2).

13. Apparatus as claimed in claim 11 or 12, further comprising separating plates (16) disposed in the upper portion of the shaft furnace (6) in upright and annular fashion, which define an annular chamber (6e) formed between the separating plates (16) and the inside wall of the shaft furnace (6); and at least two transport lines (15) for admitting one of the feed materials initiating the carbothermal reduction to the annular chamber (6e) the feed material aggregating around, and protecting, the inside wall of the shaft furnace (6).

**Revendications**

1. Procédé de préparation du gaz de synthèse (CO+H₂) par gazéification autothermique de matières riches en carbone, en fines particules, avec de l'oxygène, éventuellement en présence d'additifs gazeux caractérisé en ce que l'on injecte de la poussière de charbon à une dimension de particules allant jusqu'à 0,1 mm avec l'oxygène et éventuellement l'additif gazeux dans une zone de gazéification vide maintenue à une température de 2000 à 2600°C, on fait passer le gaz de synthèse brut formé, contenant des cendres volantes, et avec son énergie thermique interne, au travers d'une zone de réduction garnie des matières premières nécessaires pour une réduction carbothermique endotherme avec obtention de ferrosilicium, de carbure de calcium, de phosphore élémentaire ou de fer métallique et, accompagné cette fois du gaz de synthèse formé dans la réduction carbothermique, dans une zone de préchauffage placée à la suite et garnie des mêmes matières premières, et on l'évacue pour épuration et conversion à une température de 300 à 1500°C, et on évacue audessous de la zone de réduction, en tant que produit de réaction de la réduction carbothermique, du ferrosilicium, du carbure de calcium, ou du fer métallique, ainsi que les scories formées, à l'état liquide, d'une zone de récolte et de réaction subséquente.

2. Procédé selon la revendication 1, caractérisé en ce que l'on utilise les cendres contenues dans la poussière de charbon injectée ainsi que le coke utilisé pour la réduction carbothermique, en partie au moins, en tant que réactif dans la réduction carbothermique.

3. Procédé selon la revendication 1 ou 2, caractérisé en ce que l'on débarrasse le gaz de synthèse brut quittant la zone de préchauffage des poussières et des cendres et en ce que l'on recycle en partie au moins ces matières solides avec de la poussière de charbon fraîche en les injectant à nouveau dans la zone de gazéification puis dans la zone de réduction.

4. Procédé selon l'une des revendications 1 à 3, caractérisé en ce que l'on met en oeuvre les matières premières pour la réduction carbothermique à une dimension de grains de 10 à 20 mm ou de 20 à 40 mm.

5. Procédé selon l'une des revendications 1 à 4, caractérisé en ce que, pour l'obtention carbothermique de ferrosilicium à une température de 1300 à 1800°C, on alimente la zone de préchauffage et la zone de réduction en coke, grenaille de fer et éventuellement quartz.

6. Procédé selon l'une des revendications 1 à 4, caractérisé en ce que, pour l'obtention carbothermique de carbure de calcium à une température de 1800 à 2300°C, on alimente la zone de préchauffage et la zone de réduction en coke ou anthracite calciné et chaux.

7. Procédé selon l'une des revendications 1 à 4, caractérisé en ce que, pour l'obtention carbothermique de phosphore élémentaire à une température de 1300 à 1700°C, on alimente la zone de préchauffage et la zone de réduction en coke, phosphate de calcium et quartz.

8. Procédé selon l'une des revendications 1 à 4, caractérisé en ce que, pour l'obtention carbothermique de fer métallique à une température de 1300 à 1800°C, on alimente la zone de préchauffage et la zone de réduction en coke et minerai de fer du type oxyde.

9. Procédé selon l'une des revendications 1 à 8, caractérisé en ce que l'on utilise en tant que l'additif gazeux CO, $CO_2$, $N_2$, de la vapeur d'eau ou du gaz de synthèse recyclé.

10. Procédé selon l'une des revendications 1 à 9, caractérisé en ce que, dans la zone de gazéification, on opère avec un excès d'oxygène par rapport à la quanitité stoechiométrique nécessaire pour l'oxydation en CO.

11. Appareillage pour la mise en oeuvre du procédé selon l'une des revendications 1 à 10, caractérisé par un four à cuve (6) qui consiste, de haut en bas, en une longue chambre de préchauffage (6c), une chambre de réduction (6b) et une chambre de réaction subséquente (6d), en relation ouverte les unes avec les autres; au moins deux chambres de gazéification cylindriques se faisant face, en position latérale et contigue avec la chambre de réduction (6b) et en relation ouverte avec celles-ci, avec, dans chacune des chambres de gazéification un injecteur (3) pour l'alimentation en commun de poussière de charbon, d'oxygène et éventuellement de gaz additionnel; un conduit d'alimentation (8) pour les matières premières de la réduction carbothermique et un oonduit d'évacuation (9, 12) pour le gaz de synthèse brut en tête du four à cuve (6); au moins un conduit d'évacuation (7a, 7b) sur la chambre de réaction subséquente (6d) pour l'évacuation des scories fondues et du produit de réaction de la réduction carbothermique à l'état fondu.

12. Appareillage selon la revendication 11, caractérisé par un réservoir intermédiaire (2) de la poussière de charbon placé avant chacun des injecteurs (3), un dispositif de dépoussiérage (11) dans le conduit d'évacuation (9, 12) du gaz de synthèse brut et des conduits de recyclage (13) pour la poussière minérale déposée provenant du dispositif de dépoussiérage (11) et renvoyant aux réservoirs intermédiaires individuels (2).

13. Appareillage selon la revendication 11 ou 12, caractérisé par des tôles de séparation (16) verticales et de forme circulaire dans la partie supérieure du four à cuve (6) pour délimitation d'une chambre annulaire (6e) entre les tôles de séparation (16) et la paroi interne du four à cuve (6), et au moins deux conduits de transport (15) pour l'alimentation d'un composant des matières premières de la réduction carbothermique au travers de la chambre annulaire (6e) avec formation d'une enveloppe tassée de forme annulaire protégeant la paroi interne du four à cuve (6).

Fig. 1

Fig. 2